# EUROPEAN PATENT APPLICATION

(11) **EP 2 365 623 A1**
(43) Date of publication of application: **14.09.2011**
(21) Application number: 10156127.2
(22) Date of filing: 10.03.2010
(51) Int. Cl.: H02M 3/335

(54) **Isolated mains power supply**

(71) Applicant: NXP B.V., 5656 AG Eindhoven (NL)
(72) Inventor: Shrestha, Rameswor, Redhill, Surrey RH1 1DL (GB); Smeets, Patrick Emanuel Gerardus, Redhill, Surrey RH1 1DL (GB); Nowak, Katarzyna, Redhill, Surrey RH1 1DL (GB)
(74) Representative: Ashton, Gareth Mark

(57) **Abstract**

An isolated power supply comprises an input side and a transformer for transforming the input side power supply signal and providing it to an isolated output side. A single isolated transducer transmits control data between the input and output side or vice versa and optionally also in full duplex fashion, using a single data stream which can comprise multiple independent data sub-streams. These can be multiplexed data sub-streams channels and/or simultaneous bidirectional sub-streams.

## Description

This invention relates to the field of serial data communication for isolated power supplies, for example switched-mode power supplies.

A switched-mode power supply (SMPS) is an electronic power supply that incorporates a switching regulator in order to provide the required output voltage, typically at a different level than the input voltage.

If the SMPS has an ac input, then the first stage is to rectify the input to dc.

An inverter stage (or chopper) converts the dc signal, whether directly from the input or from the rectifier stage, to ac by running it through a power oscillator at a frequency of typically tens or hundreds of kHz.

When the output is required to be isolated from the input, for example when the input is mains power, the inverted ac signal is used to drive the primary winding of a high-frequency transformer. This converts the voltage up or down to the required output level on its secondary winding.

If a dc output is required, the ac output from the transformer is rectified. The rectified output is then smoothed by a filter.

The isolation ensures that safe operation is guaranteed. Control information for certain output parameters derived at the isolated side often has to be communicated to the non-isolated side where the power supply control unit may reside. For example, a feedback circuit is often used to monitor the output voltage and compare it with a reference voltage in order to control the inverter at the input non-isolated side. Alternatively, certain information may have to be sent from the non-isolated to the isolated side.

In both cases, the communication channel has to be isolated. Conventional power supplies use opto-electronic devices, like optocouplers, for this purpose. Optocouplers are relatively expensive, sensitive to parameter variation and in most cases a dc biasing current is required for proper operation. The latter can result in significant reduction in efficiency under certain low load conditions. In other cases magnetic or capacitive transducers might be used. These components are also relatively expensive. In all cases the number of transducers is (nearly) equivalent to the number of data streams that has to cross the isolation.

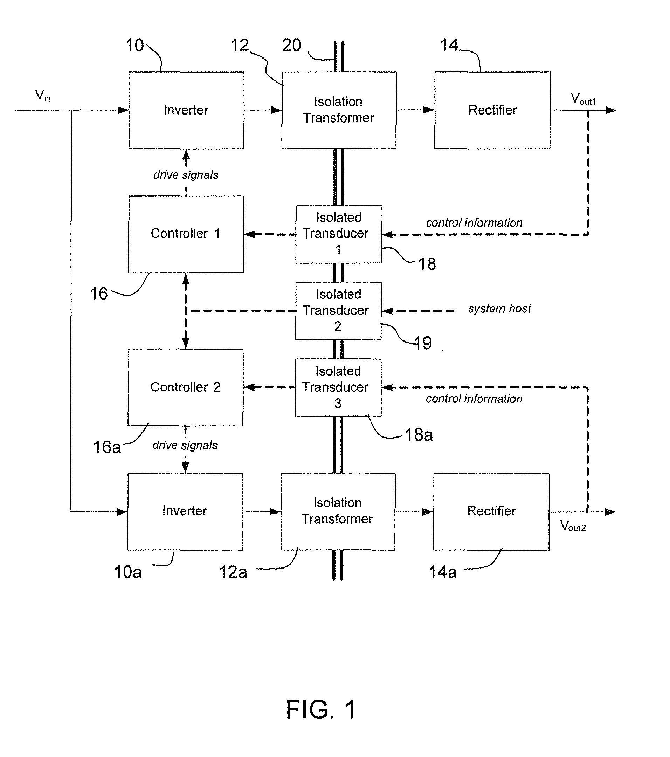

Figure 1 shows an example of a conventional power supply architecture consisting of three isolated transducers: two transducers to send control information and one transducer to send system host information from the isolated to the non-isolated side.

This example shows two converter paths, to generate first and second dc voltages Vout1 and Vout2.

The power converter receives a dc input Vin (which has already been rectified from ac by a rectifier which is not shown).

In respect of the first converter path, the input is supplied to the inverter (chopper) 10. The ac output of the inverter is provided to the isolation transformer 12 and the ac output is then rectified by the rectifier 14 to generate the desired dc output Vout1. In respect of the second converter path, the input is supplied to the inverter (chopper) 10a. The ac output of the inverter is provided to the isolation transformer 12a and the ac output is then rectified by the rectifier 14a to generate the desired dc output Vout1.

The two output voltages Vout1 and Vout2 are fed back as control parameters. To feed these signals back to the controllers 16 and 16a for the inverters, isolated transducers 18 and 18a are used. A further isolated transducer 19 is shown for feeding system host data back to the controllers 16 and 16a. The host data can be control signals to put the controllers 16 and 16a into different modes of operation or to program certain voltage/current sensing levels in these controllers. The transformers and isolated transducers define an isolation barrier 20 which separates all communications between the input (mains) side and the output (device) side.

A transducer is provided for each data stream across the isolation barrier 20, as shown.

Similarly, for bidirectional communication across the isolation barrier, either two opto-couplers or dual opto-couplers in the same package are needed. In both cases, the cost increases.

There have been proposals to avoid the use of opto-couplers in order to reduce power consumption and cost, for example by using a capacitor or an isolated signal transformer. These can be used as a means for bidirectional communication. However, current implementations of bidirectional communication over a single channel is only half-duplex. General drawbacks of half-duplex are:
low bandwidth as the transmission can be made in only one direction at a time;
less reliable data transmission as collisions can occur;
high latency as the sender needs to wait for the appropriate time; and
significant increase in circuit complexity compared to its full-duplex counterpart.

There is therefore a need to reduce the complexity and cost of a power supply in which multiple data streams (either multiple data streams in one direction or bidirectional data streams) are desired to cross the isolation barrier.

According to the invention, there is provided an isolated power supply comprising:
an input side;
a transformer for transforming the input side power supply signal and providing it to an isolated output side; and
an isolated transducer for transmitting at least control data from one side to the other, wherein the isolated transducer transmits a single data stream comprising multiple independent data sub-streams.

The invention uses a single transducer for multiple data sub-streams, so that the cost of components and the power consumption can be kept to a minimum for all data communications that are required between the input and output sides.

The input side can receive a mains ac supply voltage and the output side can provides a dc output voltage. The conventional switched mode power supply components can be provided, consisting of an inverter at the input side, a rectifier at the output side, and a controller at the input side for controlling the inverter. However, the output can be an ac power supply (in which case no rectifier at the output is needed.

In one example, the single data stream comprises simultaneous bidirectional data sub-streams.

This approach can exploit the orthogonally between current and voltage to achieve full-duplex serial communication over a bidirectional isolated channel.

One side can comprise an encoding circuit, for example a pulse width encoding circuit for modulating a logical zero with a first pulse width and a logical one with a second pulse width, and a transmitter for transmitting the modulated signal. This provides a transmission of data in the voltage domain. The other side can comprise an impedance modulator for varying the impedance of a node at the transducer in dependence on data to be transmitted, and the one side then comprises an impedance monitor. This provides a current-based transmission of data.

The other side can comprise an encoding circuit, again for example a pulse width encoding circuit for modulating a zero with a first pulse width and a one with a second pulse width, for controlling the impedance modulator. The impedance monitor monitors the current of the transmitter.

In this arrangement, the one side preferably comprises the output side and the other side comprises the input side. The data transmission rate from the output side to the input side is preferably higher than from the input side to the output side. Thus, the higher rate transmission uses the voltage waveform signal rather than the current-based signal.

In another example, the one side (e.g. the output side) comprises a multiplexer for multiplexing multiple control data sub-streams together and providing the multiplexed signal to the isolated transducer, and the input side comprises a demultiplexer for providing the multiple control data sub-streams.

In this way, multiple sub-streams are combined (for example in a time division manner) and provided as a single data stream. This multiplexing approach can be combined with the full duplex approach.

The invention also provides a method of operating an isolated power supply, comprising:
transforming an input side power supply signal and providing it to an isolated output side; and
transmitting control data between one side and the other side using an isolated transducer, wherein the isolated transducer transmits a single data stream comprising multiple independent data sub-streams.

Examples of the invention will now be described in detail with reference to the accompanying drawings, in which:
Figure 1 shows a known isolated switched-mode power supply;
Figure 2 shows a first example of isolated switched-mode power supply of the invention; and
Figure 3 shows a second example of isolated switched-mode power supply of the invention.

The invention provides an isolated power supply comprising an input side, and a transformer for transforming the input side power supply signal and providing it to an isolated output side. An isolated transducer transmits control data between the input and output side (either in one direction only for feedback/feedforward control or in bideirectional manner). A single data stream is transmitted by the transducer but which comprises multiple independent data sub-streams.

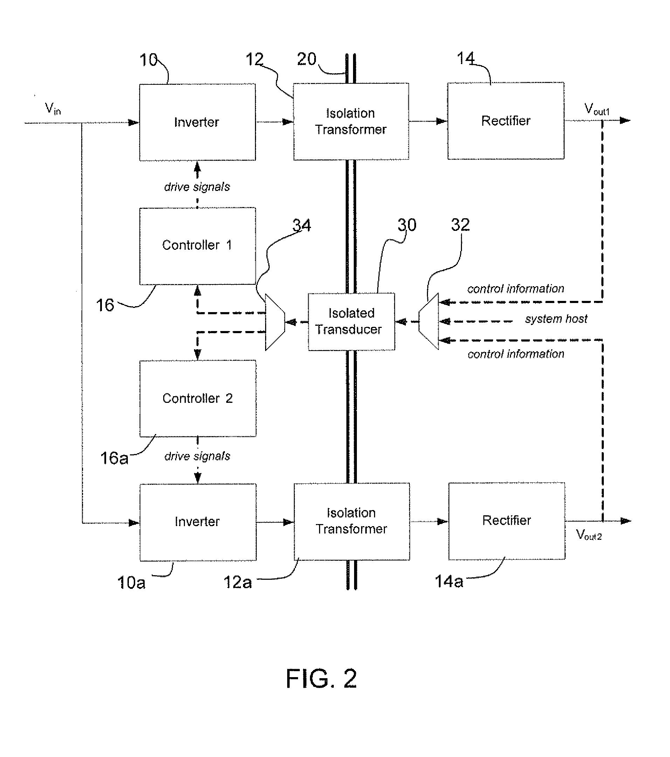

A first example of power supply of the invention is shown in Figure 2. The same reference numbers are used as in Figure 1 for the same components.

The circuit of Figure 2 differs from Figure 1 in respect of the transducer arrangement. For the same data channels as in the example of Figure 1 (two feedback control data streams and one system host data stream), a single isolated transducer 30 is provided, providing a single communication channel across the isolation barrier. The data streams can thus be considered as data sub-streams over the single channel. For data transmission only from the isolated (output) side to the non-isolated (input) side, a multiplexer 32 is provided in the output side and a demultiplexer 34 is provided in the input side.

Note that the invention is also applicable with the two sides of the communication channel are swapped (i.e. from input side to output side), although in practice feedback signals are more common, with highest bandwidth from the isolated side to the non-isolated side.

The multiplexer arrangement routes the three data sub-streams in time-division multiplex manner.

In more general terms, the information from various sources can be multiplexed into one data stream which is then sent over the isolation barrier by means of one transducer, i.e. over one channel. At the other side of the isolation the data stream is de-multiplexed again and sent to the receivers, which in the example shown are the inverter controllers.

The number of data sub-streams is limited only by the bandwidth of the transducer.

The data sub-stream processing is preferably implemented in the digital domain, but analogue processing can be applied as well.

A multiplexer and de-multiplexer can be provided on each side of the isolation barrier, in order to enable multiplexed communication in a bidirectional fashion.

This design allows a reduced number of transducers resulting in cost reduction, reliability enhancement and power reduction.

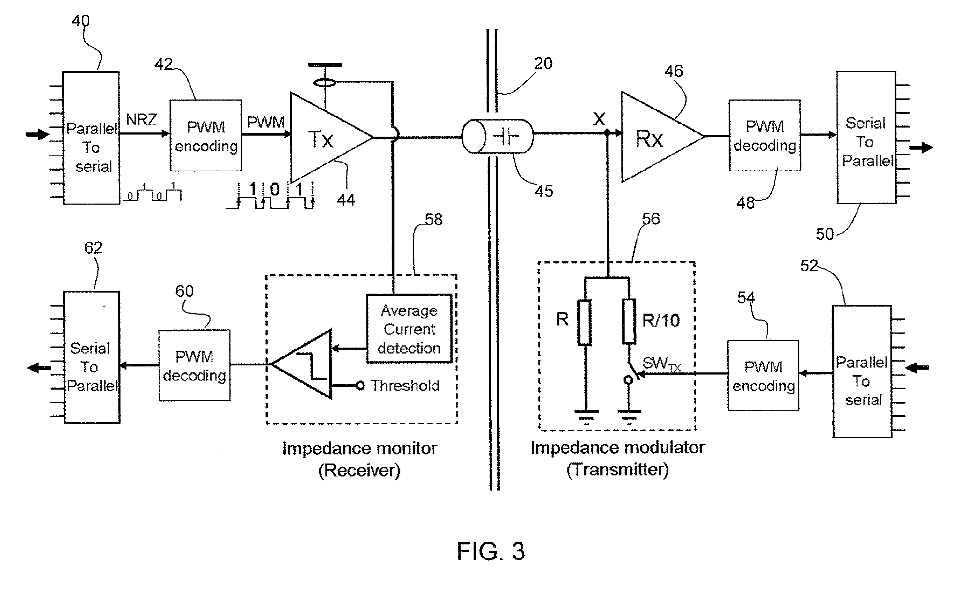

In addition to (or instead of) the combination of independent sub-streams by multiplexing over a single channel, the invention also enables bidirectional communication over the single channel. This is explained with reference to Figure 3. This figure shows only the components associated with the data channel transmission. Thus, the inverter, rectifier, controllers and isolated transformer will also be provided, although these are not shown in Figure 3.

This circuit provides bidirectional serial data communication over a single isolated channel. Thus, multiple sub-streams (two sub-streams in opposite directions) are again provided as a single data stream. This achieves full-duplex communication. In Figure 3, the isolated side is to the left of the isolation barrier, and the non-isolated side is to the right, but the isolated and non-isolated sides can again be interchanged.

In order for a single data stream to be used to convey information in both directions, different detection methods are used. The way data is transmitted in each direction will thus be described in turn.

### (i) Data Transmission from Isolated to Non-isolated side

In the transmitting (isolated) side the incoming data bits are converted to a serial data sub-stream by using a parallel to serial converter 40, providing a non-return-to-zero (NRZ) format. A PWM encoding circuit 42 then encodes the data over the clock signal by using pulse width modulation (PWM). PWM is a well known data encoding technique where '1' and '0' are distinguished by the pulse width. For example 75% duty cycle can be used to represent '1' and 25% duty cycle to represent '0'.

The main advantage of the PWM data encoding is that the clock recovery becomes very easy as the leading or the falling edge of the clock remains intact in the PWM data stream.

The transmitter 44 sends the PWM data stream over the channel using the isolated transducer device 45.

The receiver 46 of the non-isolated side detects the incoming PWM data stream. A PWM decoding circuit 48 converts it back to the original NRZ data stream. It also recovers the clock. The serial NRZ data bits are then converted to parallel by using a serial to parallel converter 50.

This data transmission is essentially a voltage-based encoding and detection system in that the voltage of the data stream encodes the data stream bits.

### (ii) Data Transmission from Non-isolated to Isolated Side

In the transmitting (non-isolated) side, the incoming data bits are converted to a serial data sub-stream using the parallel to serial converter 52 and then PWM encoded using encoder 54 as in the above case. However, the encoding does not need to be of the same format as for the opposite direction transmission, as the two encoding and detection processes are independent.

The main functional blocks that enable the full-duplex communication are (i) an impedance modulator 56 that changes the impedance of the receiver input at the non-isolated side (node 'x') according to the incoming PWM data and (ii) an impedance monitor circuit 58 on the isolated side. This monitor circuit 58 monitors the average current of the transmitter 44. By changing the impedance at the receiver, the output impedance seen by the transmitter is effectively varied.

Typically, the data transmission rate from the non-isolated to the isolated side is lower than from the isolated to the non-isolated side (i.e. the feedback control path).

The impedance modulator circuit 56 contains two resistors R and R/10 and a switch 'SW_{TX}' driven by the incoming PWM data as shown in Figure 3. One resistor is in series with the switch and the other is in parallel with the resistor-switch combination. The resistor which is in series with the SW_{TX} is, for example, 10 times smaller than the other resistor. When the switch SW_{TX} of the impedance modulator is closed, the impedance at the node 'x' is decreased by 10 times. This results in change of supply current of transmitter 44 by about 10 times. Of course any detectable change in current can be used, for example with a ratio between the resistors in the range of 2 to 100.

The impedance monitor 58 compares this current with an appropriate threshold level, essentially to detect the logic '0' or '1'. The received PWM data is then converted back to the original NRZ data stream by a PWM decoder 60 and to the parallel data stream by a serial to parallel converter 62.

This data transmission is essentially a current-based encoding and detection system in that the transmission current drawn by the transmitter encodes the data stream bits.

When the transmitter is sending a high level, current is drawn from the supply rail of the isolated side and this current is measured. Of course when the level is low, no current flows from the supply rail. However, both a logical '1' and '0' consist of a high and low level period (for example respectively 75% and 25%), so for both values current can be measured. No synchronization is needed since only the average current is required. This also means that communication using the impedance coding technique does not work when there is no communication in the voltage domain, from the isolated side 44 to non-isolated side 46, in this example. Thus, the impedance coding system requires the voltage encoding system to be active (even though the voltage encoding can be modulating a string of zeros).

The communication speed in the current domain should be lower, for example by a factor of one order of magnitude or more than the communication in the voltage domain.

The above is also valid if isolated and non-isolated sides are swapped (so voltage communication from non-isolated to isolated side, and current communication from isolated to non-isolated side).

This full-duplex communication with a single channel again results in a lower cost solution to enable data communication with mains isolation.

Optocouplers can be used as the isolated transducers if only single directional communication is needed. For the full duplex version, optocouplers can not be used in this invention since they are one directional, and the current domain impedance modulation can not be applied. The isolated transducer can then for example comprise an isolated capacitor or isolated signal transformer. The power consumption is then significantly lower than when using opto-couplers, as no high bias current is needed. A further problem with opto-couplers is that their CTR (gain) degrades over time. Without compensating for the gain variation, the functional life time of a system is not guaranteed. These problems can be avoided by using alternative transducers.

Various different inductive or capacitive transducers are possible. Simple versions transduce the actual signal, whereas more advanced version include additional logic and send HF modulated information in order to reduce the size of the transducer.

The disadvantage of the standard optocoupler is the limited bandwidth and the fact that the device is unidirectional. Improved optocouplers are available at a price penalty.

The output of the power supply typically comprises a low voltage dc signal, e.g. 24V or less. 12V and 5V supplies are particularly common.

As explained above a single data stream comprise multiple independent data sub-streams. These data sub-streams originate from different sources - for example they can be different feedback parameters.

As will be apparent from the description above, the invention is concerned particularly with the single channel multiplexed or full duplex communication rather than the specific type of power supply.

Thus, the invention can be applied to other isolated power supplies than the switched-mode power supply example schematically shown. There may be multiple output voltages (for example 2 to 5), giving rise to multiple feedback or feedforward control signals, which can then be combined into a single data stream for transmission using a shared transducer.

In the example above, PWM coding is used, but other coding methods may be employed such as Manchester encoding. This coding also provides a 1 and 0 level within each bit period, so that even a data string of zeros results in encoded 1 levels so that the impedance encoding system can function at the same time. Various other encoding methods can also be used, preferably which encode data 1s and data 0s with a signal which includes both voltage levels.

The bidirectional encoding system can be used in combination with the multiplexing approach or in isolation. Similarly, the multiplexing system can be used in combination with the bidirectional encoding system or in isolation.

Various modifications will be apparent to those skilled in the art.

## Claims

1. An isolated power supply comprising:
an input side;
a transformer for transforming the input side power supply signal and providing it to an isolated output side; and
an isolated transducer for transmitting at least control data from one side to the other, wherein the isolated transducer transmits a single data stream comprising multiple independent data sub-streams.

2. A power supply as claimed in claim 1, wherein the input side receives a mains ac supply voltage.

3. A power supply as claimed in any preceding claim, wherein the output side provides a dc output voltage.

4. A power supply as claimed in any preceding claim, comprising an inverter at the input side, a rectifier at the output side, and a controller at the input side and/or the output side for controlling the inverter and/or the rectifier.

5. A power supply as claimed in any preceding claim, wherein the single data stream comprises simultaneous bidirectional data sub-streams.

6. A power supply as claimed in claim 5, wherein one side comprises:
an encoding circuit for generating a modulated signal and a transmitter for transmitting the modulated signal, and the other side comprises:
an impedance modulator for varying the impedance of a node at the transducer in dependence on data to be transmitted, and the one side comprises an impedance monitor.

7. A power supply as claimed in claim 6, wherein the other side comprises an encoding circuit for controlling the impedance modulator:

8. A power supply as claimed in claim 6 or 7, wherein the encoding circuit or circuits comprises a pulse width encoding circuit for modulating a zero with a first pulse width and a one with a second pulse width

9. A power supply as claimed in claim 6, 7 or 8, wherein the impedance monitor monitors the current of the transmitter.

10. A power supply as claimed in any one of claims 6 to 9, wherein the one side comprises the output side and the other side comprises the input side.

11. A power supply as claimed in claim 10, wherein the data transmission rate from said one side to said other side is higher than from said other side to said one side.

12. A power supply as claimed in any preceding claim, wherein the one side comprises a multiplexer for multiplexing multiple control data sub-streams together and providing the multiplexed signal to the isolated transducer, and the other side comprises a demultiplexer for providing the multiple control data sub-streams.

13. A method of operating an isolated power supply, comprising:
transforming an input side power supply signal and providing it to an isolated output side; and
transmitting control data between one side and the other side using an isolated transducer, wherein the isolated transducer transmits a single data stream comprising multiple independent data sub-streams.

14. A method as claimed in claim 13, comprising using the transducer to simultaneously transmit bidirectional data sub-streams.

15. A method as claimed in claim 13 or 14, comprising, in the one side, multiplexing multiple control data sub-streams together and providing the multiplexed signal to the isolated transducer, and demultiplexing to provide the multiple control data sub-streams in the other side.
